Europäisches Patentamt

(19) European Patent Office

Office européen des brevets

(11) Numéro de publication: **0 451 032 A1**

(12) **DEMANDE DE BREVET EUROPEEN**

(21) Numéro de dépôt: **91400853.7**

(22) Date de dépôt: **28.03.91**

(51) Int. Cl.⁵: **F24H 3/00, F24D 13/02**

(30) Priorité: **28.03.90 FR 9004549**

(43) Date de publication de la demande: **09.10.91 Bulletin 91/41**

(84) Etats contractants désignés: **BE CH DE ES FR GB IT LI**

(71) Demandeur: **Dupuy, Jean-Paul Le Val de Loire - Avrilly F-03130 Le Donjon (FR)**

(72) Inventeur: **Dupuy, Jean-Paul Le Val de Loire - Avrilly F-03130 Le Donjon (FR)**

(74) Mandataire: **Chanet, Jacques 56 avenue de Royat, B.P. 27 F-63401 Chamalières Cédex (FR)**

(54) Dispositif de chauffage associant un élément décoratif radiant et un élément fonctionnel à résistance électrique.

㉗ La présente invention a pour objet un dispositif de chauffage des locaux, du genre de dispositif mettant en oeuvre une résistance électrique fixée sur un support et un habillage évitant le contact inopiné des personnes avec la résistance, principalement caractérisé en ce qu'il est constitué d'une plaque décorative (1) en un matériau supportant des températures comprises entre 50 et 100°C, et d'une plaque (2) dite fonctionnelle de sensiblement mêmes dimensions que la plaque décorative et destinée à recevoir et à supporter la plaque décorative, la dite plaque fonctionnelle présentant une surface légèrement bombée en son centre du coté de contact avec la plaque décorative et comportant un sillon (3) en zig-zag refermé sur lui-même pour loger la résistance électrique; la plaque fonctionnelle supporte en outre des moyens (6) de maintien de la plaque décorative, et sur sa face arrière, des moyens (7) pour assurer sa propre fixation amovible contre un mur, et des moyens (8) d'alimentation électrique et de régulation de la température.

Fig.5

La présente invention est du domaine du chauffage et elle a plus particulièrement pour objet un calorifère à source d'énergie électrique associant un élément décoratif formant une surface radiante et un élément fonctionnel à effet joule.

On connait les calorifères constitués d'une plaque de lave, ou autres pierres naturelles, à la face postérieure de laquelle ont été gravé des sillons, ou un sillon en zig-zag, dans lesquels est noyée la résistance électrique ; on connait également les calorifères constitués de deux plaques de marbre entre lesquelles une résistance électrique est insérée, le tout étant solidarisé par une résine thermo-résistante ; différentes conformations ont été proposées pour ceux-ci. Un inconvénient de tels dispositifs réside dans le fait que lorsque l'élément fonctionnel tombe en panne, il est nécessaire de démonter l'ensemble pour l'envoyer chez le réparateur, et quelque fois même il n'est pas réparable ; un autre inconvénient réside dans la difficulté de stockage d'ensembles finis combinant un grand nombres de formes décoratives et plusieurs puissances de chauffage, par exemple.

Le but de la présente invention est de proposer une organisation calorifère telle qu'elle permette d'associer à la livraison l'élément décoratif et l'élément fonctionnel, ce dernier au moins étant prélevé sur un stock existant.

Ainsi et selon la présente invention un dispositif, dit calorifère, de chauffage des locaux, du genre de dispositif mettant en oeuvre une résistance électrique fixée sur un support et un habillage évitant le contact inopiné des personnes avec la résistance, principalement caractérisé en ce qu'il est constitué : d'une plaque décorative en un matériau supportant des températures comprises entre 50 et 100°C, et d'une plaque dite fonctionnelle de sensiblement mêmes dimensions que la plaque décorative et destinée à recevoir, en contact étroit, et à supporter la plaque décorative, la dite plaque fonctionnelle présentant une surface légèrement bombée en son centre du coté de contact avec la plaque décorative et comportant un sillon en zig-zag refermé sur lui-même pour loger la résistance électrique, la dite plaque fonctionnelle supportant en outre des moyens de maintien de la plaque décorative, et sur sa face arrière, des moyens pour assurer sa propre fixation amovible contre un mur, et des moyens d'alimentation électrique et de régulation de la température.

Suivant une première forme de réalisation la plaque est une tôle métallique, acier ou aluminium par exemple, dans laquelle le sillon en zig-zag a été embouti.

Suivant une seconde forme de réalisation la plaque est réalisée par moulage d'une résine thermo résistante armée de fibres thermo-résistantes, telles que fibres de verre ou fibres de carbone.

La présente invention sera mieux comprise et des détails en relevant apparaîtront à la description qui va être faite d'une forme préférée de réalisation, en relation avec les figures de la planche unique annexée, dans laquelle :

– la fig.1 est une illustration en perspective de la plaque avant radiale formant l'élément décoratif,

– la fig.2 est une illustration analogue de la plaque postérieure chauffante constituant l'élément fonctionnel, vue depuis sa face antérieure,

– la fig. 3 est une vue analogue de la plaque postérieure, vue depuis sa face arrière,

– la fig.4 illustre l'incurvation réelle de la plaque postérieure; et

– la fig.5 illustre vu de côté le calorifère de l'invention fixé à un mur.

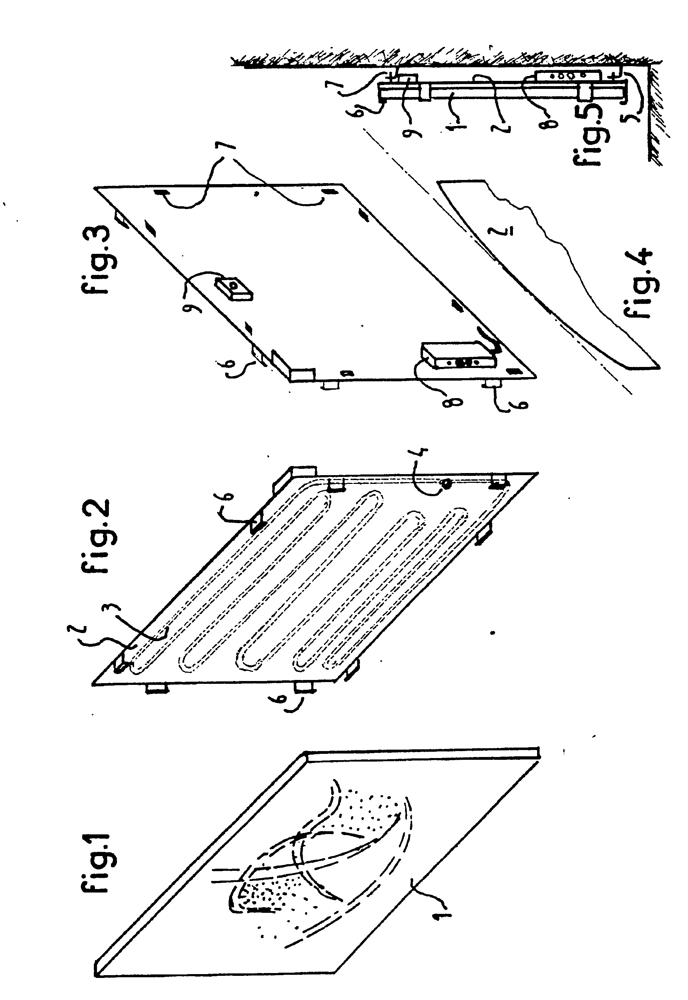

Sur la fig.1, la plaque avant 1 est, par exemple, une plaque de lave, émaillée par exemple ou encore sculptée, sur sa face antérieure ; elle pourrait être encore une plaque de marbre ou de granit, ou autre roche naturelle.

Sur la fig.2 la plaque postérieure 2, par exemple formée d'un complexe moulé aluminium-résine époxy, comporte un sillon 3 en zig-zag refermé sur lui-même destiné à loger une résistance électrique (non figurée sur le dessin) qui traverse à ses deux extrémités la plaque par un orifice 4 en vue de son raccordement au circuit d'alimentation. La résistance électrique peut être avantageusement un cordon souple siliconé constitué d'une âme en fibre de verre avec un filament résistif en alliage enroulé en spiral, le tout enrobé dans une gaine en élastomère siliconé avec paroi de 1m/m ou 2m/m d'épaisseur. Le cordon souple, source de chaleur, est simplement inserti en place sans outil avec uniquement une trace d'adhésif pour le maintenir en position lors de l'assemblage des deux faces et assurer un bon contact pour un transfert efficace de la chaleur.

Sur la fig.3 apparaissent un certain nombres d'organes tels que des moyens 5 de maintien de la plaque décorative contre la plaque fonctionnelle contre le mur, des moyens 8 d'alimentation électrique et des moyens 9 de régulation de la température.

Des moyens 6 peuvent être des griffes insérant élastiquement, le bord de la plaque avant, mais aussi de simples pattes pourvues d'un trou pour le passage d'une vis, vissable dans l'épaisseur de la plaque avant. Les moyens 7 pourront être de simples anses enfichables sur des crochets fixés au mur ; ils pourraient être encore de simples pattes vissables sur des pattes analogues fixées au mur.

A la description des moyens précités, on comprend qu'il est très aisé de fixer l'ensemble à un mur, mais aussi de désolidariser les différents éléments.

Sur la fig.4, on a figuré la forme avantageusement bombée de la plaque des fig.2 et 3 qui a été représentée plane pour la simplification du dessin. La forme bombée de l'élément fonctionnel, dont la matière sera flexible assure un contact plus étroit entre l'élément fonctionnel et l'élément décoratif.

Sur la fig.5, on retrouve les principaux éléments précités tels qu'ils apparaissent lorsque le dispositif se trouve en sa situation normale d'utilisation.

De la même manière et pour les mêmes raisons de contact intime entre les deux plaques, un composé ciment-colle avantageusement soluble à l'eau après immersion prolongée, peut être appliqué entre les deux pour renforcer le plaquage des deux surfaces et maximiser le transfert de la chaleur.

Suivant une forme de réalisation, non représentée sur les figures, de la plaque fonctionnelle, on colle sur une plaque dite support des éléments, dits plaquettes, en pierre découpée de forme parallélépipédique plate et allongée, à une distance d les uns des autres, ladite distance constituant la largeur des sillons en zig-zag destinés au logement de la résistance électrique. Avantageusement la pierre constitutive des plaquettes est la pierre volcanique dite lave, le collage est effectué au moyen d'un ciment-colle réfractaire, enfin le matériau constitutif du support est soit une tôle métallique soit une plaque de matériau composite (résine, fibre) tel que décrit plus haut.

Bien que l'on ait décrit et représenté une forme préférée de réalisation, il doit être compris que la portée de la présente invention n'est pas limitée à cette forme mais qu'elle s'étend à tout dispositif comportant les caractéristiques ennoncées plus haut.

**Revendications**

1.- Dispositif de chauffage des locaux, du genre de dispositit mettant en oeuvre une résistance électrique fixée sur un support et un habillage évitant le contact inopiné des personnes avec la résistance, caractérisé :

en ce qu'il est constitué :

d'une plaque décorative (1) en un matériau supportant des températures comprises entre 50 et 100°C, et

d'une plaque (2) dite fonctionnelle de sensiblement mêmes dimensions que la plaque décorative et destinée à recevoir, en contact étroit, et à supporter la plaque décorative, la dite plaque fonctionnelle présentant une surface légèrement bombée en son centre du côté de contact avec la plaque décorative et composant un sillon (3) en zig-zag refermé sur lui-même pour loger la résistance électrique, la dite plaque fonctionnelle supportant en outre :

des moyens (6) de maintien de la plaque décorative, et sur sa face arrière,

des moyens (7) pour assurer sa propre fixation amovible contre un mur, et

des moyens (8) d'alimentation électrique et de régulation de la température.

2.- Dispositif selon la revendication 1, carartérisé :

en ce que la dite plaque décorative est une plaque de l'un des matériaux du groupe comprenant la lave, le granit, le marbre.

3.- Dispositif selon la revendication 1 caractérisé:

en ce que la dite plaque fonctionnelle est une tôle métallique emboutie.

4.- Dispositif selon la revendication 1, caractérisé :

en ce que la dite plaque fonctionnelle est obtenue par moulage d'une résine thermo résistante armée de fibres elles mêmes thermo-résistantes.

5.- Dispositif selon la revendication 1, caractérisé :

en ce que la dite plaque fonctionnelle est un complexe d'aluminium et de résine époxy armé.

6.- Dispositif selon la revendication 1, caractérisé :

en ce que les dits moyens (6) de maintien de la plaque décorative supportés par la plaque fonctionnelle sont des griffes élastiques destinées à faire prise sur le bord de la plaque décorative.

7.- Dispositif selon la revendication 1, caractérisé :

en ce que les dits moyens (7) pour assurer la fixation de la plaque fonctionnelle contre le mur sont constitués par des anses enfichables dans des crochets fixés au mur.

8.- Dispositif selon la revendication 2, caractérisé :

en ce que le dit sillon est formé par collage sur une plaque support, d'éléments en pierre découpée de forme parallélépipédique allongée, à une distance d les uns des autres, ladite distance constituant la largeur dudit sillon en zig zag.

fig.1

fig.2

fig.3

fig.4

fig.5

EP 0 451 032 A1

Office européen
des brevets

**RAPPORT DE RECHERCHE EUROPEENNE**

Numero de la demande

EP 1400853
EP 91 40 0853

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 285 171 (RUPP) <br> * Le document en entier * <br> --- | 1,2,3,7 | F 24 H    3/00 <br> F 24 D   13/02 |
| A | EP-A-0 271 886 (SCHWEIGER) <br> * Le document en entier * <br> --- | 1,2,3,7 | |
| A | EP-A-0 285 171 (RUPP) <br> * le document en entier * <br> --- | 1,2,3,7 | |
| A | EP-A-0 271 886 (SCHWEIGER) <br> * le document en entier * <br> ----- | 1,2,3,7 | |

**DOMAINES TECHNIQUES RECHERCHES (Int. Cl.5)**

F 24 H
F 24 D

Le présent rapport a été établi pour toutes les revendications

| Lieu de la recherche | Date d'achèvement de la recherche | Examinateur |
|---|---|---|
| LA HAYE | 09-07-1991 | VAN GESTEL H.M. |